(19) Europäisches Patentamt
European Patent Office
Office européen des brevets

(11) EP 0 748 838 A1

# (12) EUROPÄISCHE PATENTANMELDUNG

(43) Veröffentlichungstag:
**18.12.1996 Patentblatt 1996/51**

(51) Int. Cl.[6]: **C08K 5/3467**, C08L 83/04
// (C08K5/3467, C08L83:04)

(21) Anmeldenummer: **96109471.1**

(22) Anmeldetag: **13.06.1996**

(84) Benannte Vertragsstaaten:
**AT BE CH DE ES FR GB IT LI NL SE**

(30) Priorität: **14.06.1995 DE 19521757**

(71) Anmelder: **Wacker-Chemie GmbH**
**D-81737 München (DE)**

(72) Erfinder:
- **Achenbach, Frank, Dr.**
  **84359 Simbach, (DE)**
- **Hechtl, Wolfgang, Dr.**
  **83389 Burghausen, (DE)**
- **Eberl, Georg**
  **84489 Burghausen, (DE)**
- **Egerter, Norbert**
  **84561 Mehring, (DE)**
- **Schreyer, Sabine**
  **84489 Burghausen, (DE)**

(74) Vertreter: **Fritz, Helmut, Dr.**
**Wacker-Chemie GmbH,**
**Zentralabteilung Patente,**
**Marken und Lizenzen,**
**Hanns-Seidel-Platz 4**
**81737 München (DE)**

## (54) Porphyrinhaltige Silicone mit erhöhter Temperaturbeständigkeit

(57) Die Siliconmassen, insbesondere Siliconöle und vernetzbare Siliconmassen enthalten Porphyrine als Hitzestabilisator.

EP 0 748 838 A1

Printed by Rank Xerox (UK) Business Services
2.13.10/3.4

**Beschreibung**

Die Erfindung betrifft porphyrinhaltige Silicone und zu einem Siliconkautschuk mit erhöhter Temperaturbeständigkeit vernetzende Siliconmassen, sowie die Verwendung von Porphyrinen als Hitzestabilisator in Siliconen.

Die Stabilität von Siliconen, sowohl unvernetzter Polyorganosiloxane, wie Siliconöle als auch vernetzter Siliconkautschuke, bei thermischer und/oder thermooxidativer Beanspruchung kann bekanntermaßen durch bestimmte Zusätze als Hitzestabilisatoren beträchtlich erhöht werden.

Als typische Vertreter dieser Hitzestabilisatoren sind die Elemente und Verbindungen der Übergangsmetalle und Lanthaniden bekannt, vor allem die Elemente Ti, Mn, Fe, Co, Ni, Cu, Zn, Zr, Hf, Ce, Pd, Pt und deren Verbindungen. Eine weitere Gruppe bilden organische Verbindungen, die als Radikalfänger oder Metallionen-Desaktivatoren bekannt sind, sowie Ruß.

Beispielsweise sind in US-A-3,026,263 als Hitzestabilisatoren für Siliconöle Kombinationen bestehend aus einem N-aryl-2-naphthylamin oder einem Acridin mit einem mindestens dreikernigen Aromaten mit einer Singulett-Triplett-Anregungsenergie unterhalb 20.000 $cm^{-1}$, wie Anthracen, Benzanthracen, Chrysen und Pyren beschrieben. Diese Hitzestabilisatoren sind physiologisch bedenklich und zu wenig wirksam.

US-A-2,723,964 beschreibt die hitzestabilisierende Wirkung von mindestens fünfkernigen Aromaten, wie Perylen, Coronen und 2,3,8,9-Dibenzcoronen, Thioindigofarbstoffen und Phthalocyaninen und deren Derivaten, wie Kupferphthalocyanin, Magnesiumphthalocyanin und chloriertes Kupferphthalocyanin. Die Phthalocyanine sind gute Hitzestabilisatoren, jedoch sind sie schlecht in den gebräuchlichen organischen Lösungsmitteln löslich und können deshalb schlecht im Silicon homogen verteilt werden. Folglich werden beispielsweise die Festigkeitswerte von hitzestabilisiertem Siliconkautschuk nachteilig verändert.

Es bestand die Aufgabe, besonders wirksame Hitzestabilisatoren für Silicone bereitzustellen.

Gegenstand der Erfindung sind Siliconmassen, die Porphyrine als Hitzestabilisator enthalten.

Porphyrine enthaltende Siliconöle und Siliconelastomere weisen eine deutlich höhere thermooxidative Stabilität auf als herkömmliche Hitzestabilisatoren enthaltende Systeme. Damit ist es möglich, die Gebrauchseigenschaften von Siliconmassen, insbesondere von Siliconölen und Siliconelastomeren längere Zeit bei höheren Temperaturen als bisher aufrechtzuerhalten.

Porphyrine vermögen, unabhängig von der Art der Vernetzung, die thermooxidative Stabilität von Siliconelastomeren bereits bei Gehalten von einigen hundert Gew.-ppm beträchtlich zu erhöhen.

Die große Vielfalt innerhalb der Klasse der Porphyrin-Verbindungen ermöglicht eine größere Flexibilität hinsichtlich geforderter Finaleigenschaften der Siliconmassen, wie Thermostabilität, Farbe, Transparenz und toxikologischen Anforderungen. Es können folglich für die jeweilige Anwendung maßgeschneiderte Hitzestabilisatoren ausgewählt werden. Siliconöle und Siliconelastomere, die zum Zwecke der Erhöhung ihrer Thermostabilität Porphyrine enthalten sind transparent und entsprechen in der Farbe den Porphyrinen. Die Farbe kann durch geeignete Wahl der Porphyrine festgelegt werden. Die Farbtiefe wird durch den Porphyrin-Gehalt bestimmt.

Die Porphyrine können in gebräuchlichen Lösemitteln gelöst werden, wodurch eine homogene Verteilung in der zu stabilisierenden Masse wesentlich erleichtert wird und keine nachteilige Beeinflussung der ultimativen Festigkeitswerte der stabilisierten Siliconelastomere verursacht wird.

Der Hitzestabilisator umfaßt das 21H,23H-Porphyrin sowie sämtliche sich von diesem Grundgerüst ableitende Verbindungen, die hier zusammenfassend als Porphyrine bezeichnet werden. Am 21H,23H-Porphyrin-Grundgerüst können in höchstens 4 meso-Positionen und höchstens 8 β-Pyrrolpositionen Substituenten gebunden sein. Die Porphyrine weisen ein konjugiertes Ringsystem auf. Vorzugsweise absorbieren die Porphyrine elektromagnetische Strahlung im Wellenlängenbereich zwischen 400 und 800 nm.

Typische geeignete Porphyrine sind in den allgemeinen Formeln (1) und (2) dargestellt,

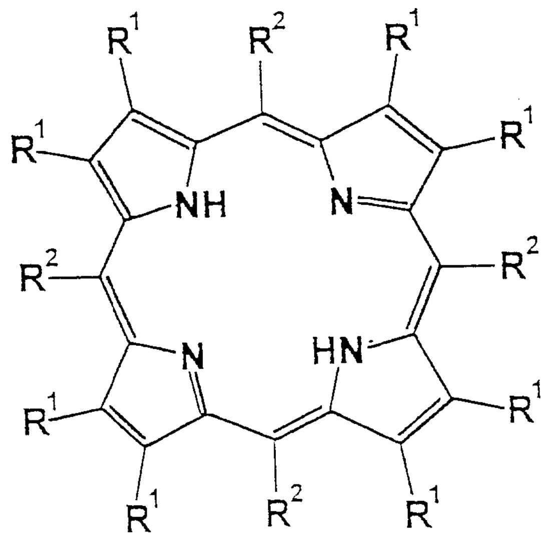

(1)

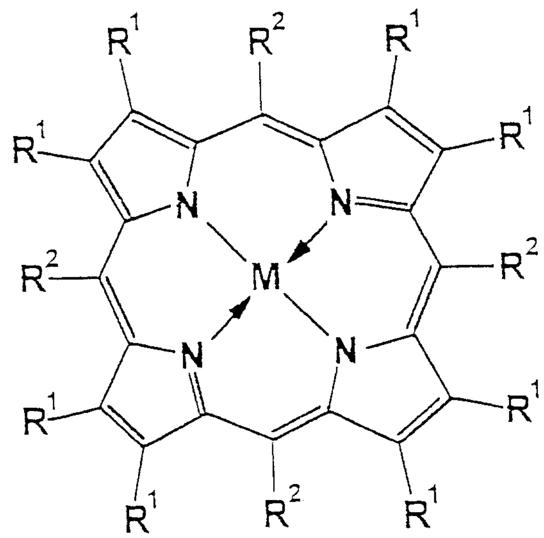

(2)

in denen

**$R^2$** gleiche oder verschiedene Reste, die ausgewählt werden aus der Gruppe -H, -OH, $-OR^3$, $-COR^3$, $-OCOR^3$, $-NO_2$, -CN, -F, -Cl, -Br, -J, -SCN, -OCN, -N=N-OH, $-NR^3_2$ und $-SO_3A$, nichtsubstituierten und mit -H, -OH, $-OR^3$, $-COR^3$, $-COOR^3$, $-OCOR^3$, $-NO_2$, -CN,-F, -Cl, -Br, -J, -SCN, -OCN, -N=N-OH, $-NR^3_2$, $-NR^3_3B$ und $-SO_3A$ substituierten monovalenten Kohlenwasserstoffresten mit 1 bis 20 Kohlenstoffatomen, wobei in den nichtsubstituierten und substituierten monovalenten Kohlenwasserstoffresten nicht benachbarte Einheiten -CH= durch Einheiten -N= und Einheiten $-CH_2-$ durch Einheiten -O-, -S- oder -NH- ersetzt sein können,

**$R^3$** ausgewählt wird aus der Gruppe -H oder monovalenten Kohlenwasserstoffresten mit 1 bis 20 Kohlenstoffatomen,

**A** ausgewählt wird aus der Gruppe -H, Na, K,

**B** ausgewählt wird aus der Gruppe Cl, F, Br, J,

**$R^1$** gleiche oder verschiedene Reste **$R^2$** oder zwei vicinale Reste **$R^1$** zusammen mit den Kohlenstoffatomen des Porphyrinrings, an die sie gebunden sind einen 5 bis 10 Kohlenstoffatome aufweisenden cyclischen Kohlenwasserstoffrest, in dem nicht benachbarte Einheiten -CH= durch Einheiten -N= und Einheiten $-CH_2-$ durch Einheiten -O-, - S- oder -NH- ersetzt sein können, wobei in dem cyclischen Kohlenwasserstoffrest, Einheiten -CH= und $-CH_2-$mit -H, -OH, $-OR^3$, $-COR^3$, $-COOR^3$, $-OCOR^3$, $-NO_2$, -CN,-F, -Cl, -Br, -J, -SCN, -OCN, -N=N-OH, $-NR^3_2$, $-NR^3_3B$ und $-SO_3A$ substituiert sein können und

**M** ein Metall, das ausgewählt wird aus der Gruppe Li, Na, K, Rb und Cs, Be, Mg, Sr, Ba, V, Cr, Mn, Fe, Co, Ni, Cu, Zn, Zr, Ru, Hf, Os, Cd, Hg, Ag, Au, Pd, Pt, Si, Ge, Sn, In und Ce wobei, falls die Oxidationsstufe von **M** größer als 2 ist, die freien Valenzen durch Reste $\mathbf{R^2}$ oder Reste siliziumorganischer Verbindungen abgesättigt sein können, bedeuten.

Neben den in den allgemeinen Formeln (1) und (2) dargestellten Porphyrinen können auch die sich durch partielle Hydrierung ableitenden Verbindungen des Porphyrins verwendet werden, sofern die Konjugation des Ringsystems nicht aufgehoben wird, wie 2,3-Dihydro-porphyrin, 2,3,7,8-Tetrahydro-porphyrin, 5,10,15,20-Tetramethyl-2,3-dihydroporphyrin, 5,10,15,20-Tetraphenyl-2,3,7,8-tetrahydroporphyrin und deren Derivate, insbesondere wenn sie die vorstehenden Reste $\mathbf{R^1}$ und $\mathbf{R^2}$ aufweisen. Ebenso können mehrkernige sowie anderweitig überbrückte Porphyrine verwendet werden.

Beispiele für Reste $\mathbf{R^2}$ sind die Alkylgruppen, wie Methyl, Ethyl, Propyl, iso-Propyl, Butyl, iso-Butyl, sec.-Butyl, tert.-Butyl, Pentyl, Hexyl, Heptyl, 2-Ethylhexyl, Octyl, Dodecyl, Octadecyl, Chlormethyl, 2-Chlorethyl, 2-Cyanoethyl, 2,2-Dichlorethyl, 3,3,3-Trifluorpropyl, 2,2,2,2',2',2'-Hexafluorisopropyl, Heptafluorisopropyl, Perfluorhexylethyl und beta-Cyanethyl, die Cycloalkylgruppen, wie Cyclopentyl, Cyclohexyl, Cycloheptyl, Methylcyclohexyl, Cyclooctyl, 3,4-Dichlorcyclohexyl und 2,6-Dibromcycloheptyl, die Alkenyl- und Alkinylgruppen, wie Vinyl, Allyl, Methallyl, 1-Propenyl, 5-Hexenyl, Ethinyl, Butadienyl, Hexadienyl, Cyclopentenyl, Cyclopentadienyl und Cyclohexenyl, die Arylgruppen, wie Phenyl, Tolyl, Xylyl, Mesityl, Benzyl, beta-Phenylethyl, Phenylpropyl, Naphthyl, o-, m- und p-Chlorphenyl, 3-Sulfophenyl, 4-Nitrophenyl, Dichlorphenyl, Trichlorphenyl, Pentachlorphenyl, Difluorphenyl, Pentafluorphenyl, Trifluormethylphenyl, 4-Pyridyl, 1-Methyl-4-pyridinio, 4-Trimethylammoniophenyl und Bromtolyl, Alkoxygruppen, wie Methoxy, Ethoxy, Propoxy, Butoxy, tert.-Butoxy, 4-Methoxyphenyl, Chlormethoxy, Dichlorethoxy und Dichlorpentoxy, eine alkoholische Gruppe, wie Hydroxymethyl, 1-Hydroxyethyl, 3-Hydroxypropyl, 3-Hydroxypropenyl, ein aldehydischer Rest, wie Formyl und 3-Oxopropenyl, andere Sauerstoff enthaltende Reste, wie Acetyl, Acetoxy, Propanoyloxy, Benzoyl, Benzoyloxy, Hexanoyloxy und Hexadecanoyl. Bevorzugt als Reste $\mathbf{R^2}$ sind -H, Alkyl- und Arylgruppen. Besonders bevorzugte Reste $\mathbf{R^2}$ sind -H und Phenyl.

Beispiele für Porphyrine, bei denen zwei vicinale Reste $\mathbf{R^1}$ zusammen mit den Kohlenstoffatomen des Porphyrinrings, an die sie gebunden sind einen 5 bis 10 Kohlenstoffatome aufweisenden cyclischen Kohlenwasserstoffrest bilden sind Benzoporphyrine und Naphthoporphyrine.

Vorzugsweise weisen unabhängig voneinander die Kohlenwasserstoffreste $\mathbf{R^1}$, $\mathbf{R^2}$ und $\mathbf{R^3}$ 1 bis 10 Kohlenstoffatome auf. Vorzugsweise sind die Reste $\mathbf{R^1}$, $\mathbf{R^2}$ und $\mathbf{R^3}$ Wasserstoffatome, Alkyl- und Arylreste, insbesondere nichtsubstituiert.

Bevorzugt als **M** sind Li, Na, K, Rb und Cs, Mg, Ba, V, Cr, Mn, Fe, Co, Ni, Cu, Zn und Si.

Die Reste siliziumorganischer Verbindungen an **M** können beispielsweise über Sauerstoff oder einen zweiwertigen Kohlenwasserstoffrest mit 1 bis 20 Kohlenstoffatomen, insbesondere einen zweiwertigen Alkylrest mit 1 bis 10 Kohlenstoffatomen gebunden sein. Beispiele für solche Reste siliziumorganischer Verbindungen sind Trimethylsilyl, Trimethylsilylmethyl, Trimethylsilylmethylen, Trimethylsilyloxy und Trimethylsilyloxybutyl.

Als Siliconmassen, die Porphyrine als Hitzestabilisator enthalten, sind Siliconöle bevorzugt. Vorzugsweise ist das Siliconöl ein Polyorganosiloxan (I) mit einer Viskosität bei 25°C von mindestens 10, insbesondere 100 mPa•s und höchstens $10^9$, vorzugsweise $10^6$, insbesondere 50 000 mPa•s.

Vorzugsweise ist das Polyorganosiloxan (I) aus Einheiten der allgemeinen Formel (3)

$$R^4{}_aSiO_{(4-a)/2} \quad (3),$$

aufgebaut, wobei

$\mathbf{R^4}$ gleiche oder verschiedene nichtsubstituierte oder mit Fluor, Chlor, Brom oder Cyanogruppen substituierte, monovalente Kohlenwasserstoffreste mit 1 bis 18 Kohlenstoffatomen und

**a** die Werte 0, 1, 2 oder 3 bedeuten.

Beispiele für die monovalenten Kohlenwasserstoffreste $\mathbf{R^4}$ sind aliphatisch gesättigte oder ungesättigte Alkylgruppen, wie Methyl, Ethyl, Propyl, iso-Propyl, Butyl, iso-Butyl, sec.-Butyl, tert.-Butyl, Pentyl, Hexyl, Heptyl, 2-Ethylhexyl, Octyl, Dodecyl, Octadecyl, Chlormethyl, 2,2-Dichlorethyl, 3,3,3-Trifluorpropyl, 2,2,2,2',2',2'-Hexafluorisopropyl, Heptafluorisopropyl, Perfluorhexylethyl und beta-Cyanethyl, die Cycloalkylgruppen, wie Cyclopentyl, Cyclohexyl, Cycloheptyl, Methylcyclohexyl, Cyclooctyl, 3,4-Dichlorcyclohexyl und 2,6-Dibromcycloheptyl, Alkenyl- und Alkinylgruppen, wie Vinyl, Allyl, Methallyl, 1-Propenyl, 5-Hexenyl, Ethinyl, Butadienyl, Hexadienyl, Cyclopentenyl, Cyclopentadienyl und

Cyclohexenyl, Arylgruppen, wie Phenyl, Tolyl, Xylyl, Mesityl, Benzyl, beta-Phenylethyl, Phenylpropyl, Naphthyl, o-, m- und p-Chlorphenyl, Dichlorphenyl, Trichlorphenyl, Difluorphenyl, Trifluormethylphenyl und Bromtolyl.

Vorzugsweise weisen die Kohlenwasserstoffreste $\mathbf{R^4}$ 1 bis 7 Kohlenstoffatome auf. Bevorzugt sind nichtsubstituierte Alkyl- und Arylgruppen. Besonders bevorzugt sind Methyl und Phenyl.

In geringerem Umfang können auch Si-gebundene H-, HO- und Alkoxygruppen, wie Methoxy, Ethoxy und Propoxy enthalten sein. Das Polyorganosiloxan (I) kann linear, cyclisch, verzweigt oder netzwerkartig sein. Verzweigte Polyorganosiloxane enthalten neben monofunktionellen Einheiten, wie $R^4{}_3SiO_{1/2}$, und difunktionellen Einheiten, wie $R^4{}_2SiO_{2/2}$, auch trifunktionelle Einheiten, wie $R^4SiO_{3/2}$, und/oder tetrafunktionelle Einheiten, $SiO_{4/2}$. Die Verwendung linearer und verzweigter Polyorganosiloxane (I) ist bevorzugt. Besonders bevorzugt werden lineare Polyorganosiloxane (I).

Das Polyorganosiloxan (I) kann auch Einheiten der allgemeinen Formel (4)

$$-OSi(R^4{}_2)R^5Si(R^4{}_2)O- \qquad (4),$$

enthalten, wobei

**R⁵** gleiche oder verschiedene nichtsubstituierte oder mit Fluor, Chlor, Brom oder Cyanogruppen substituierte, zweiwertige Kohlenwasserstoffreste mit 1 bis 18 Kohlenstoffatomen oder Polyoxy-$C_1$-bis-$C_4$-alkylenreste bedeutet und

**R⁴** die vorstehenden Bedeutungen aufweist.

Beispiele für zweiwertige Kohlenwasserstoffreste $\mathbf{R^5}$ sind zweiwertige nichtsubstituierte Kohlenwasserstoffreste, wie Ethylen, Propylen, Phenylen und Diphenylen. Beispiele für Polyoxy-$C_1$-bis-$C_4$-alkylenreste sind Polyoxyethylen und Polyoxymethylen. Zweiwertige Reste $\mathbf{R^5}$ können bis zu 50 Mol-% im Siliconöl enthalten sein.

Das Siliconöl kann auch eine Mischung der voranstehend beschriebenen Polyorganosiloxane (I) sein. Besonders bevorzugte Siliconöle sind polymere Dimethylsiloxane, Diphenylsiloxane und Methylphenylsiloxane sowie copolymere Dimethyl-methylphenylsiloxane und Dimethyl-methylvinylsiloxane, wobei diese Trimethylsiloxy-, Dimethylvinylsiloxy- und Hydroxyl-endständig sein können.

Ebenfalls bevorzugte Siliconmassen, sind vernetzungsfähige Siliconkautschukmassen, die Porphyrine als Hitzestabilisator enthalten und die daraus durch Vernetzung erhältlichen Siliconkautschukmassen.

Die Art der Vernetzung der Siliconkautschukmassen ist für die Wirksamkeit dieser Hitzestabilisatoren nicht maßgeblich. Beispielsweise können additions-, peroxidisch-, kondensations-, dehydrokondensations- und strahlungsvernetzende Siliconkautschukmassen als hitzestabilisierenden Zusatz Porphyrine enthalten.

Die vernetzungsfähigen Siliconkautschukmassen umfassen neben Porphyrinen die Bestandteile

(I) Polyorganosiloxan (I),
(II) vernetzungsspezifische Zusätze, gegebenenfalls
(III) Füllstoff, und gegebenenfalls
(IV) weitere Zusätze.

Bestandteil (I) entspricht dem vorstehend beschriebenen Polyorganosiloxan (I).

Vorzugsweise beträgt die Viskosität des für vernetzungsfähige Siliconkautschukmassen eingesetzten Polyorganosiloxans (I) bei 25°C mindestens 1, insbesondere 100 mPa • s und höchstens $10^9$, vorzugsweise $10^8$, insbesondere $10^7$ mPa • s.

Polyorganosiloxane (I) additionsvernetzender Massen enthalten mindestens zwei aliphatisch ungesättigte Gruppen $\mathbf{R^4}$, die einer Hydrosilylierungsreaktion mit einem SiH-funktionellen Vernetzungsmittel zugänglich sind. Hierzu zählen die bereits aufgeführten aliphatisch ungesättigten Alkenyl-, Cycloalkenyl- und Alkinylgruppen. Polyorganosiloxane (I) additionsvernetzender Massen können jedoch als aliphatisch ungesättigte Gruppen Alkenyloxyalkylgruppen, wie Allyloxypropyl aufweisen. Die Alkenylgruppen können sich in jeder Position der Polymerkette, insbesondere an den endständigen Siliciumatomen, befinden.

Besonders bevorzugt ist die Verwendung Vinylgruppen enthaltender Polydimethylsiloxane, deren Moleküle der allgemeinen Formel (5)

$$(ViMe_2SiO_{1/2})_2(ViMeSiO_{2/2})_b(Me_2SiO_{2/2})_c \qquad (5),$$

entsprechen, wobei Vi Vinylgruppen und Me Methylgruppen bedeuten, b und c nichtnegative Zahlen sind und folgende Relationen erfüllen: $b+1>0$, $50<(b+c)<10000$, vorzugsweise $200<(b+c)<5000$, und $0<(b+1)/(b+c)<0.2$.

Das in additionsvernetzenden Siliconkautschukmassen als Vernetzer fungierende SiH-funktionelle Polyorganosiloxan (I) ist aus Einheiten der allgemeinen Formel (6)

$$H_dR^4{}_eSiO_{(4-d-e)/2} \qquad (6),$$

aufgebaut, wobei $R^4$ die vorstehenden Bedeutungen aufweist, d 0, 1 oder 2 ist, e 0, 1, 2 oder 3 ist, mit der Maßgabe, daß die Summe (d+e) < 4 ist und daß mindestens zwei siliciumgebundene Wasserstoffatome pro Molekül vorhanden sind.

Bevorzugt ist die Verwendung eines drei oder mehr SiH-Bindungen pro Molekül enthaltenden Polyorganosiloxans (I). Bei Verwendung eines nur zwei SiH-Bindungen pro Molekül aufweisenden Polyorganosiloxans (I) enthält das aliphatisch ungesättigte Gruppen enthaltende Polyorganosiloxan (I) vorzugsweise mindestens drei Alkenylgruppen pro Molekül.

Der Wasserstoffgehalt des SiH-funktionellen Polyorganosiloxans (I), welcher sich ausschließlich auf die direkt an Siliciumatome gebundenen Wasserstoffatome bezieht, beträgt vorzugsweise mindestens 0,002, insbesondere 0,1 Gew.-% Wasserstoff und vorzugsweise höchstens 2,5 insbesondere 1,5 Gew.-1% Wasserstoff.

Das SiH-funktionelle Polyorganosiloxan (I) enthält vorzugsweise mindestens drei und vorzugsweise höchstens 600 Siliciumatome pro Molekül. Besonders bevorzugt ist die Verwendung von SiH-funktionellen Polyorganosiloxanen (I) als Vernetzer, die zwischen 4 und 200 Siliciumatome pro Molekül enthalten.

Aliphatisch ungesättigte Gruppen enthaltendes und SiH-funktionelles Polyorganosiloxan (I) liegen bevorzugt in getrennten Komponenten, beispielsweise als Zweikomponentensystem vor, so daß erst nach deren Vermischung die Vernetzungsreaktion ablaufen kann.

Polyorganosiloxane (I) peroxidisch vernetzender Siliconkautschukmassen bedürfen im allgemeinen keiner speziellen organischen Reste. Besonders bevorzugt ist die Verwendung SiOH-, Trimethylsiloxy- oder Dimethylvinylsiloxy-endständiger Polydimethylsiloxane die gegebenenfalls 0,05 bis 0.5, vorzugsweise 0,1 bis 0.2 Gew.-% Vinylgruppen in Form von $ViMe_2SiO_{1/2}$ und/oder $ViMeSiO_{2/2}$-Einheiten enthalten.

Die Viskosität der für kondensationsvernetzende Siliconkautschukmassen verwendeten Polyorganosiloxane (I) beträgt bei 25°C vorzugsweise mindestens 100, insbesondere mindestens 1000 mPa • s und vorzugsweise höchstens $10^9$, insbesondere höchstens $10^8$ mPa • s.

Polyorganosiloxane (I) kondensationsvernetzender Siliconkautschukmassen enthalten Silanolgruppen oder solche Gruppen, die unter hydrolytischen Bedingungen unter Bildung von Silanolgruppen reagieren. $R^4$ kann daher auch eine Hydroxyl-, Acetoxy-, Alkoxy-, Amino-, Amido-, Aminoxy-, Isopropenoxy- und Oximatogruppe sein. Die Viskosität der für kondensationsvernetzende Siliconkautschukmassen verwendeten Polyorganosiloxane (I) beträgt bei 25°C vorzugsweise mindestens 20, insbesondere mindestens 100 mPa • s und vorzugsweise höchstens $10^9$, insbesondere höchstens 10 000 mPa • s.

Kondensationsvernetzende Siliconkautschukmassen können als Ein- und Zweikomponentensystem vorliegen (RTV-1 und RTV-2). Zur Herstellung kondensationsvernetzender RTV-1-Systeme wird vorzugsweise ein SiOH-endständiges Polydiorganosiloxan mit einem oder mehreren Silanen, die mindestens zwei hydrolysierbare Gruppen, wie Acetoxy-, Alkoxy-, Amino-, Amido-, Aminoxy-, Isopropenoxy- oder Oximato-, enthalten, gegebenenfalls in Anwesenheit eines Kondensationskatalysators, unter wasserfreien Bedingungen umgesetzt. Hierfür können auch Teilhydrolysate der voranstehend beschriebenen, hydrolysierbare Gruppen enthaltenden Silane verwendet werden. Derartige RTV-1-Systeme vernetzen unter dem Einfluß der Luftfeuchtigkeit von der Oberfläche her. Ein über mindestens drei hydrolysierbare Gruppen verfügendes Silan bzw. dessen Teilhydrolysat fungiert als Vernetzer. Der Vernetzer kann auch getrennt von dem zu vernetzenden Polyorganosiloxan vorliegen (RTV-2-System).

Bestandteil (I) kann eine beliebige Mischung verschiedener, voranstehend beschriebener Polyorganosiloxane (I) sein. Bestandteil (I) kann gegebenenfalls auf mehrere Komponenten verteilt sein.

Bei Bestandteil (II) handelt es sich im Fall einer additionsvernetzenden Siliconkautschukmasse um einen Hydrosilylierungskatalysator. Als Hydrosilylierungskatalysator können prinzipiell alle üblicherweise in additionsvernetzenden Siliconkautschukmassen eingesetzten Katalysatoren verwendet werden. Hierzu zählen Übergangsmetalle, wie Platin, Rhodium, Palladium, Ruthenium und Iridium, vorzugsweise Platin, die gegebenenfalls auf feinteiligen Trägermaterialien, wie Aktivkohle, Metalloxiden, wie Aluminiumoxid oder pyrogen hergestelltes Siliciumdioxid, fixiert sind.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln $(PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Bei Verwendung gebräuchlicher Platin-Katalysatoren liegt der Gehalt der härtbaren Siliconkautschukmasse bezogen auf Platin-Metall vorzugsweise im Bereich von 0,1 bis 500 Gew.-ppm, vorzugsweise bei 10 bis 100 Gew.-ppm.

Ein weiterer, für additionsvernetzende Siliconkautschukmassen typischer Bestandteil sind Inhibitoren, die der

gezielten Einstellung der Verarbeitungszeit und der Vulkanisationscharakteristik dienen. Diese an sich bekannten Inhibitoren und Stabilisatoren sind beispielsweise acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxane mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphine, Phosphite, Nitrile, Diaziridine und Oxime. Besonders bevorzugte Inhibitoren sind acetylenische Alkohole.

Bestandteil (II) einer peroxidisch vernetzenden Siliconkautschukmasse ist eine organische Peroxidverbindung. Vorzugsweise werden Peroxide, wie Dibenzoylperoxid, Bis-(2,4-dichlor-benzoyl)-peroxid, Dicumylperoxid, 2,5-Bis-(tert.-butylperoxy)-2,5-dimethyl-hexan, 1,4-Bis-(tert.-butylperoxy-isopropoxy)-benzen sowie deren Gemische eingesetzt. Besonders bevorzugt sind Dicumylperoxid und Bis-(2,4-dichlorbenzoyl)-peroxid. Der Gehalt der vernetzbaren Polyorganosiloxanmasse an Peroxid beträgt vorzugsweise mindestens 0,1, insbesondere 0,7 Gew.-% und vorzugsweise höchstens 4.0 Gew.-%, insbesondere 1.5 Gew.-%.

Als Bestandteil (II) einer kondensationsvernetzenden Siliconkautschukmasse kann ein Kondensationskatalysator enthalten sein. Als Kondensationskatalysator eignen sich prinzipiell alle Säuren, Basen und Salze der Metalle Zinn, Titan, Zirkonium, Blei, Cobalt, Zink, Kupfer, Mangan, Eisen, sowie quartäre Ammoniumsalze mit organischen Säuren, Alkoholen oder Chelatbildnern. Vorzugsweise werden Verbindungen des Zinns, Titans und Zirkoniums verwendet. Besonders bevorzugt sind Dialkylzinndicarboxylate, wie Dibutylzinndilaurat und Dibutylzinndiacetat.

Die vernetzungsfähige Siliconkautschukmasse kann als Bestandteil (III) einen Füllstoff enthalten. Man unterscheidet aktiv verstärkende Füllstoffe und nicht verstärkende Füllstoffe. Aktiv verstärkende Füllstoffe weisen eine spezifische Oberfläche nach BET von mindestens 50 $m^2/g$ auf, vorzugsweise 50 bis 500 $m^2/g$. Beispiele für aktiv verstärkende Füllstoffe sind pyrogen erzeugte Kieselsäure, unter Erhalt der Struktur entwässerte Kieselsäurehydrogele, also sogenannte "Aerogele", und andere Arten von gefälltem Siliciumdioxid, Furnace-Ruß und Acetylen-Ruß.

Zu den nicht verstärkenden Füllstoffen, also Füllstoffen mit einer spezifischen Oberfläche nach BET von weniger als 50 $m^2/g$, zählen Quarzmehl, Diatomeenerde, Calciumsilicat, Zirkoniumsilicat, Zeolithe, Eisenoxid, Zinkoxid, Titandioxid, Aluminiumoxid, Calciumcarbonat, Magnesiumcarbonat, Zinkcarbonat, Ruß, Graphit, Glimmer und Kreide.

Die genannten Füllstoffe können gegebenenfalls durch Behandlung mit einem Hydrophobierungsmittel hydrophob gemacht werden. Hydrophobierungsmittel sind Alkylchlorsilane, wie Methyltrichlorsilan, Dimethyldichlorsilan und Octadecylmethyldichlorsilan; Alkylalkoxysilane, wie Dimethyldimethoxysilan, Trimethylethoxysilan und Dimethyldiethoxysilan; Trimethylsilanol; Disilazane, wie Hexamethyldisilazan, Divinyltetramethyldisilazan und Cyclohexamethyltrisilazan; niedermolekulare Cyclosiloxane, wie Octamethylcyclotetrasiloxan und kurzkettige SiOH-endständige Polydimethylsiloxane mit einer Kettenlänge im Bereich von 2 bis 20 Siloxaneinheiten.

Der Gehalt der vernetzungsfähigen Siliconkautschukmassen an den genannten Füllstoffen kann 0 bis 80 Gew.-%, vorzugsweise zwischen 0 und 50 Gew.% betragen.

Die vernetzbare Siliconkautschukmasse kann noch 0 bis 80 Gew.-%, vorzugsweise zwischen 0 und 30 Gew.% weitere Zusätze (IV) enthalten. Hierzu zählen beispielsweise Dispergierhilfsmittel, Farbstoffe, Pigmente, Kokatalysatoren, Haftvermittler, Antioxidantien, Metall-Desaktivatoren, Metallstäube, Glas- und Keramikfasern, Lösungsmittel, Wasser, Konservierungsmittel, Biozide, Kunststoffpulver, Weichmacher, Siliconharze, Weichwalzmittel, Emulgatoren und Stabilisatoren.

Insbesondere zählen zu den weiteren Zusätzen (IV) andere Hitzestabilisatoren. Da Hitzestabilisatoren teils unterschiedliche Wirkmechanismen besitzen und teils synergetische Effekte bei der Kombination verschiedener Hitzestabilisatoren erzielt werden können, kann die vernetzbare Siliconkautschukmasse neben den Porphyrinen auch weitere gebräuchliche Hitzestabilisatoren enthalten.

Die Siliconöle können ebenfalls neben den Porphyrinen weitere gebräuchliche Hitzestabilisatoren enthalten.

Das als Hitzestabilisator fungierende Porphyrin kann entweder direkt in feinteiliger Form in die zu stabilisierende Siliconmasse eingemischt werden, oder fixiert auf einem feinteiligem Trägermaterial, wie pyrogene Kieselsäure, oder mittels eines geeigneten Lösemittels, welches gegebenenfalls nachträglich wieder entfernt werden kann. Das Porphyrin kann auch in Form einer weitgehend homogenen Mischung mit einem mit der zu stabilisierenden Siliconmasse kompatiblen Material, wie einem Siliconöl, eingebracht werden. Das als Hitzestabilisator fungierende Porphyrin kann auch durch Synthese derselben in der zu stabilisierenden Siliconmasse eingebracht werden, indem die Ausgangsstoffe in dieser zur Reaktion gebracht werden. Bevorzugt ist die Herstellung homogener, das Porphyrin in hoher Konzentration enthaltender Hitzestabilisatoren, die eine einfache Einmischung/Zudosierung als Additiv erlauben. Es können auch mehrere verschiedene Porphyrine simultan eingesetzt werden. Mit zunehmend feinerer Verteilung der Porphyrine in dem zu stabilisierenden Medium wird eine Zunahme der hitzestabilisierenden Wirkung beobachtet.

Die Herstellung der als Hitzestabilisator fungierenden Porphyrin-Verbindungen ist an sich bekannt.

Der Gehalt der thermisch stabilisierten Siliconmasse an Porphyrin beträgt vorzugsweise mindestens 5, besonders bevorzugt 100 und insbesondere 500 Gew.-ppm. und vorzugsweise höchstens 100000, besonders bevorzugt 5000, insbesondere 1000 Gew.-ppm.

Die Herstellung der thermisch stabilisierten Siliconmasse erfolgt vorzugsweise dadurch, daß das Siliconöl bzw. die

vernetzbare Siliconkautschukmasse und das Porphyrin auf geeignete Weise miteinander vermischt werden. Je nach Art der Vernetzung sind unterschiedlichste Vorgehensweisen bei der Herstellung der vernetzbaren Siliconkautschukmasse bekannt. Häufig werden einzelne Bestandteile zu Komponenten zusammengefaßt, die erst zum Zwecke der Vernetzung miteinander vermischt werden. Es ist in solch einem Fall belanglos, in welche der Komponenten das Porphyrin eingearbeitet wird. Die Einarbeitung des Porphyrins kann bei Raumtemperatur oder erhöhter Temperatur, mit oder ohne Lösemittel erfolgen.

Die vernetzbaren Siliconkautschukmassen können nach den bekannten Verfahren durch Additions-, Peroxid-, Kondensations-, Dehydrokondensations- oder Strahlungsvernetzung zu Siliconelastomeren vernetzt werden.

Die thermisch stabilisierten Siliconöle eignen sich besonders als Wärmeträger in Thermostaten, als thermostabile Gleit- und Schmiermittel sowie insbesondere als Flüssigkeiten für Viscokupplungen.

Die thermisch stabilisierten vernetzbaren Siliconkautschukmassen eignen sich besonders zur Herstellung hochtemperaturbeständiger Siliconkautschukgegenstände, wie Dichtungen, Dichtungsmaterialien, elektrischen Isolationsmaterialien für die Elektroindustrie und den Automobilbau, hitzebeanspruchten Transportbändern, Walzenbelägen, Schläuchen und Folien.

Beispiele

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 0,10 MPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

Herstellung der Grundmassen (Kieselsäure/Polyorganosiloxan-Mischungen) unter Verwendung hydrophober pyrogener Kieselsäure

Verfahren A:

255 Masseteile eines Vinyldimethylsiloxy-terminierten Polydimethylsiloxans, das bei 25°C eine Viskosität von 20 Pa • s aufweist, werden mit 180 Masseteilen einer hydrophoben pyrogenen Kieselsäure mit einer spezifischen Oberfläche nach BET von 300 $m^2$/g und einem Kohlenstoffgehalt von 3.95 Gew.-%, die in Portionen zudosiert wird, während 1 Stunde in einem Doppel-Z-Kneter bei einer Temperatur von 70°C zu einer homogenen Masse vermischt. Anschließend wird diese hochviskose Masse während 3 Stunden bei 150°C unter Ölpumpenvakuum (<100 hPa) geknetet. Nach dieser Ausheizphase werden weitere 165 Masseteile des vinylfunktionellen Polydimethylsiloxans eingemischt und die Masse während 1 Stunde bei Raumtemperatur homogenisiert. Es wird eine ca. 30 Gew.-% Füllstoff enthaltende Grundmasse erhalten.

Verfahren B:

420 Masseteile eines Vinyldimethylsiloxy-terminierten Polydimethylsiloxans, das eine Brabender-Plastizität von 630 mkp, entsprechend einer mittleren Molmasse von ca. 500.000 g/mol, aufweist, werden mit 180 Masseteilen einer hydrophoben pyrogenen Kieselsäure mit einer Oberfläche nach BET von 300 $m^2$/g und einem Kohlenstoffgehalt von 3.95 Gew.-%, die in Portionen zudosiert wird, während 1 Stunde in einem Doppel-Z-Kneter bei einer Temperatur von 70°C zu einer homogenen Masse vermischt. Anschließend wird diese Masse während 3 Stunden bei 150°C unter Ölpumpenvakuum (<100 hPa) geknetet und ausgeheizt. Es wird eine ca. 30 Gew.-% Füllstoff enthaltende Grundmasse erhalten.

Verfahren C:

420 Masseteile eines SiOH-endständigen Polydimethylsiloxans, das eine Brabender-Plastizität von 460 mkp, entsprechend einer mittleren Molmasse von ca. 350.000 g/mol, aufweist, werden mit 180 Masseteilen einer hydrophoben pyrogenen Kieselsäure mit einer Oberfläche nach BET von 300 $m^2$/g und einem Kohlenstoffgehalt von 3.95 Gew.-%, die in Portionen zudosiert wird, während 1 Stunde in einem Doppel-Z-Kneter bei einer Temperatur von 70°C zu einer homogenen Masse vermischt. Anschließend wird diese Masse während 3 Stunden bei 150°C unter Ölpumpenvakuum (<100 hPa) geknetet und ausgeheizt. Es wird eine ca. 30 Gew.-% Füllstoff enthaltende Grundmasse erhalten.

Verfahren D:

288 Masseteile eines Vinyldimethylsiloxy-terminierten Polydimethylsiloxans, das bei 25°C eine Viskosität von 20 Pa.s aufweist, werden mit 226 Masseteilen einer hydrophoben pyrogenen Kieselsäure mit einer spezifischen Oberfläche nach BET von 300 $m^2/g$ und einem Kohlenstoffgehalt von 3.95 Gew.-%, die in Portionen zudosiert wird, während 1 Stunde in einem Doppel-Z-Kneter bei einer Temperatur von 70°C zu einer homogenen Masse vermischt. Anschließend wird diese hochviskose Masse während 3 Stunden bei 150°C unter Ölpumpenvakuum (<100 hPa) geknetet. Nach dieser Ausheizphase werden weitere 132 Masseteile des vinylfunktionellen Polydimethylsiloxans eingemischt und die Masse während 1 Stunde bei Raumtemperatur homogenisiert. Es wird eine ca. 35 Gew.-% Füllstoff enthaltende Grundmasse erhalten.

Verfahren E:

420 Masseteile eines Vinyldimethylsiloxy-terminierten Polydimethylsiloxans, das eine Brabender-Plastizität von 630 mkp, entsprechend einer mittleren Molmasse von ca. 500.000 g/mol, aufweist, werden mit 226 Masseteilen einer hydrophoben pyrogenen Kieselsäure mit einer Oberfläche nach BET von 300 $m^2/g$ und einem Kohlenstoffgehalt von 3.95 Gew.-%, die in Portionen zudosiert wird, während 1 Stunde in einem Doppel-Z-Kneter bei einer Temperatur von 70°C zu einer homogenen Masse vermischt. Anschließend wird diese Masse während 3 Stunden bei 150°C unter Ölpumpenvakuum (<100 hPa) geknetet und ausgeheizt. Es wird eine ca. 35 Gew.-% Füllstoff enthaltende Grundmasse erhalten.

Herstellung der Siliconelastomere

Verfahren R (Additionsvernetzung):

200 g der nach Verfahren A, B, D oder E hergestellten Grundmasse, werden nach der in den nachstehenden Beispielen beschriebenen Einarbeitung der Porphyrinverbindung auf der Walze bei einer Temperatur von 25°C während 10 Minuten mit 0.1 g Inhibitors, 0.2 g Hydrosilylierungskatalysator und 3.5 g SiH-Vernetzer zu einer homogenen Masse vermischt, wobei der Inhibitor Ethinylcyclohexanol ist, der Hydrosilylierungskatalysator eine 1 Gew.-% Platin (bezogen auf elementares Platin) enthaltenden Lösung eines Platin-sym-Divinyltetramethyldisiloxan-Komplexes in einem Vinyldimethylsiloxyendständigen Polydimethylsiloxan, das bei 25°C eine Viskosität von 1.000 mPa • s aufweist, erhältlich bei Wacker-Chemie GmbH, München unter der Bezeichnung Katalysator OL, darstellt, und der SiH-Vernetzer ein Mischpolymerisat aus Dimethylsiloxy- und Methylhydrogensiloxy- und Trimethylsiloxy-Einheiten mit einer Viskosität von 320 mPa • s bei 25°C und einem Gehalt an Si-gebundenem Wasserstoff von 0.48 Gew.-% ist. Die auf diese Weise hergestellte vernetzungsfähige Siliconkautschukmasse wird anschließend in einer hydraulischen Presse bei einer Temperatur von 170°C während 15 Minuten zum Siliconelastomer vernetzt. Die entformten, ca. 2 mm bzw. 6 mm dicken Siliconelastomerfolien werden einer 4 Stunden währenden Temperung bei 200°C in einem Umluft-Trockenschrank unterworfen.

Verfahren S (Peroxidvernetzung):

200 g der nach den Verfahren A, B, C, D oder E hergestellten Grundmassen werden nach der in den Beispielen näher beschriebenen Einarbeitung der Porphyrinverbindung auf der Walze bei einer Temperatur von 25°C während 10 Minuten 1.4 g Dicumylperoxid homogen eingemischt. Die auf diese Weise hergestellte vernetzungsfähige Siliconkautschukmasse wird anschließend in einer hydraulischen Presse bei einer Temperatur von 170°C während 15 Minuten zum Siliconelastomer vernetzt. Die entformten, ca. 2 mm bzw. 6 mm dicken Siliconelastomerfolien werden einer 4 Stunden währenden Temperung bei 200°C in einem Umluft-Trockenschrank unterworfen.

Verfahren T (Kondensationsvernetzung):

200 g der nach Verfahren C hergestellten Grundmasse werden nach der in den Beispielen näher beschriebenen Einmischung der Porphyrinverbindung auf der Walze während 15 Minuten bei einer Temperatur von 25°C mit 4 g eines Teilhydrolysates des Tetraethoxysilans, das bei 25°C eine Viskosität von 3.5 $mm^2/s$ und einen $SiO_2$-Gehalt von 41 Gew.-% aufweist, 0.4 g einer 18 Gew.-% Zink enthaltenden Zink-bis-2-ethylhexanoat-Testbenzin-Lösung, die unter der Bezeichnung "Zinkoctoat 18" von der Fa. Acima erhältlich ist, und 1 g n-Octylamin zu einer homogenen Masse vermischt. Die auf diese Weise hergestellte vernetzungsfähige Siliconkautschukmasse wird anschließend in einer hydraulischen Presse bei einer Temperatur von 140°C während 10 Minuten zu einem Siliconelastomer vernetzt. Die entformten, ca. 2 mm bzw. 6 mm dicken Siliconelastomerfolien werden einen Tag bei Raumtemperatur offen gelagert und anschließend einer 4 Stunden währenden Temperung bei 200°C in einem Umluft-Trockenschrank unterworfen.

Beispiel 1:

200 g der nach Verfahren A hergestellten Grundmasse werden mit einer variablen Menge 5,10,15,20-Tetraphenyl-21H,23H-porphyrin Nickel(II)-Komplex, gelöst in 50 ml Methylenchlorid, durch tropfenweise Zugabe auf der Walze bei einer Temperatur von 25°C während 15 Minuten intensiv vermischt, wobei das Methylenchlorid teilweise verdampft und die Porphyrinverbindung in der Siliconkautschukmasse homogen dispergiert wird. Anschließend wird bei einer Walzentemperatur von 45°C während 10 Minuten gewalzt, um das restliche Methylenchlorid zu entfernen. Die erfindungsgemäße Porphyrin-haltige Grundmasse wird durch Additionsvernetzung nach Verfahren R bzw. durch Peroxidvernetzung nach Verfahren S zu Siliconelastomeren weiterverarbeitet.

Beispiel 2:

Die Herstellung der Porphyrin-haltigen Grundmasse erfolgt wie in Beispiel 1, jedoch wird als Porphyrinverbindung der 5,10,15,20-Tetraphenyl-21H,23H-porphyrin Kupfer(II)-Komplex eingesetzt.

Beispiel 3:

Die Herstellung der Porphyrin-haltigen Grundmasse erfolgt wie in Beispiel 1, jedoch wird als Porphyrinverbindung der 5,10,15,20-Tetraphenyl-21H,23H-porphyrin Kobalt(II)-Komplex eingesetzt.

Beispiel 4:

Die Herstellung der Porphyrin-haltigen Grundmasse erfolgt wie in Beispiel 1, jedoch wird als Porphyrinverbindung der 5,10,15,20-Tetraphenyl-21H,23H-porphyrin Zink(II)-Komplex eingesetzt.

Beispiel 5:

Die Herstellung der Porphyrin-haltigen Grundmasse erfolgt wie in Beispiel 1, jedoch wird als Porphyrinverbindung der 5,10,15,20-Tetraphenyl-21H,23H-porphyrin Eisen(III)chlorid-Komplex eingesetzt.

Beispiel 6:

Die Herstellung der Porphyrin-haltigen Grundmasse erfolgt wie in Beispiel 1, jedoch wird als Porphyrinverbindung der 5,10,15,20-Tetraphenyl-21H,23H-porphyrin Mangan(III)chlorid-Komplex eingesetzt.

Beispiel 7 (nicht erfindungsgemäß):

Zwecks Vergleich wird eine Porphyrin-freie Grundmasse entsprechend der in Beispiel 1 gegebenen Vorschrift hergestellt und durch Additionsvernetzung nach Verfahren R bzw. Peroxidvernetzung nach Verfahren S zu Siliconelastomeren weiterverarbeitet.

Beispiel 8 (nicht erfindungsgemäß):

200 g einer zu gleichen Teilen aus A- und B-Komponente bestehenden (additionsvernetzenden) Flüssigpolydimethylsiloxankautschukmasse, die unter der Bezeichnung Elastosil$^R$ LR 3003/40 bei Wacker-Chemie GmbH, München erhältlich ist, werden auf der Walze bei einer Temperatur von 25°C während 10 Minuten zu einer homogenen Masse vermischt. Die auf diese Weise hergestellte vernetzungsfähige Siliconkautschukmasse wird anschließend in einer hydraulischen Presse bei einer Temperatur von 170°C während 15 Minuten zum Siliconelastomer vernetzt. Die entformten, ca. 2 mm bzw. 6 mm dicken Siliconelastomerfolien werden einer 4 Stunden währenden Temperung bei 200°C in einem Umluft-Trockenschrank unterworfen.

Beispiel 9:

100 g der A-Komponente einer (additionsvernetzenden) Flüssigpolydimethylsiloxankautschukmasse, die unter der Bezeichnung Elastosil$^R$ LR 3003/40 bei Wacker-Chemie GmbH, München erhältlich ist, werden auf der Walze mit 100 mg 5,10,15,20-Tetraphenyl-21H,23H-porphyrin (TPP), welches vollständig in 50 ml Methylenchlorid gelöst vorliegt, durch tropfenweise Zugabe bei einer Temperatur von 25°C während 15 Minuten intensiv vermischt, wobei das Methylenchlorid teilweise verdampft und die Porphyrinverbindung homogen in der Siliconkautschukmasse dispergiert wird. Anschließend wird bei einer Walzentemperatur von 45°C während 10 Minuten das restliche Methylenchlorid entfernt.

Die Porphyrin-haltige A-Komponente wird nun mit 100 g der B-Komponente besagter Flüssigsiliconkautschukmasse auf der Walze homogenisiert und anschließend, wie in Beispiel 8 beschrieben, zu einem Siliconelastomer vernetzt. Das Siliconelastomer weist einen TPP-Gehalt von 500 Gew.-ppm auf.

Beispiel 10 (nicht erfindungsgemäß):

Entspricht Beispiel 8, nur daß anstelle der Flüssigpolydimethylsiloxankautschukmasse Elastosil$^R$ LR 3003/40 die Type LR3003/50 eingesetzt wird.

Beispiel 11:

100 g der A-Komponente einer (additionsvernetzenden) Flüssigpolydimethylsiloxankautschukmasse, die unter der Bezeichnung Elastosil$^R$ LR 3003/50 bei Wacker-Chemie GmbH erhältlich ist, werden auf der Walze wahlweise mit 50, 150 bzw. 300 mg 5,10,15,20-Tetraphenyl-21H,23H-porphyrin (TPP), welches vollständig in 50 ml Methylenchlorid gelöst vorliegt, durch tropfenweise Zugabe bei einer Temperatur von 25°C während 15 Minuten intensiv vermischt, wobei das Methylenchlorid teilweise verdampft und die Porphyrinverbindung homogen in der Siliconkautschukmasse dispergiert wird. Anschließend wird bei einer Walzentemperatur von 45°C während 10 Minuten das restliche Methylenchlorid entfernt. Die TPP-haltige A-Komponente wird nun mit 100 g der B-Komponente besagter Flüssigsiliconkautschukmasse auf der Walze homogenisiert und anschließend, wie in Beispiel 8 beschrieben, zu einem Siliconelastomer vernetzt. Das Siliconelastomer weist einen TPP-Gehalt von 250, 750 bzw. 1500 Gew.-ppm auf.

Beispiel 12 (nicht erfindungsgemäß):

200 g einer zu gleichen Teilen aus A- und B-Komponente bestehenden (additionsvernetzenden) Flüssigpolydimethylsiloxankautschukmasse, die unter der Bezeichnung Elastosil$^R$ LR 3003/30 bei Wacker-Chemie GmbH, München erhältlich ist, werden auf der Walze bei einer Temperatur von 25°C während 10 Minuten zu einer homogenen Masse vermischt. Die auf diese Weise hergestellte vernetzungsfähige Siliconkautschukmasse wird anschließend in einer hydraulischen Presse bei einer Temperatur von 170°C während 15 Minuten zum Siliconelastomer vernetzt. Die entformten, ca. 2 mm bzw. 6 mm dicken Siliconelastomerfolien werden einer 4 Stunden währenden Temperung bei 200°C in einem Umluft-Trockenschrank unterworfen.

Beispiel 13:

100 g der A-Komponente einer (additionsvernetzenden) Flüssigpolydimethylsiloxankautschukmasse, die unter der Bezeichnung Elastosil$^R$ LR 3003/30 bei Wacker-Chemie GmbH, München erhältlich ist, werden auf der Walze mit 100 mg 5,10,15,20-Tetra-(4-pyridyl)-21H,23H-porphyrin, welches vollständig in 50 ml Methylenchlorid gelöst vorliegt, durch tropfenweise Zugabe bei einer Temperatur von 25°C während 15 Minuten intensiv vermischt, wobei das Methylenchlorid teilweise verdunstet und die Porphyrinverbindung homogen in der Siliconkautschukmasse dispergiert wird. Anschließend wird bei einer Walzentemperatur von 45°C während 10 Minuten das restliche Methylenchlorid entfernt. Die auf diese Weise erhaltene A-Komponente wird nun mit 100 g der B-Komponente besagter Flüssigsiliconkautschukmasse auf der Walze homogenisiert und anschließend, wie in Beispiel 12 beschrieben, zu einem Siliconelastomer vernetzt. Der Gehalt des Siliconelastomers an der Porphyrinverbindung beträgt 500 Gew.-ppm.

<u>Mechanische Werte der Siliconelastomere vor und nach Hitzebeanspruchung</u>

Die Thermostabilität der hergestellten erfindinngsgemäßen und nicht erfindungsgemäßen Siliconelastomere wird anhand folgender Kriterien bewertet:

Mechanische Elastomereigenschaften, wie Shore A-Härte (gemäß DIN 53 505), Reißfestigkeit (gemäß DIN 53 504), Reißdehnung (gemäß DIN 53 504), Weiterreißwiderstand (gemäß ASTM D624), Rückprallelastizität (DIN 53 512) sowie den Spannungswerten im Zugversuch bei 100 bzw. 300 % Dehnung, vor und nach thermischer Beanspruchung der Siliconelastomere durch offene Lagerung während unterschiedlicher Zeiten bei 250°C in einem Umluft-Trockenschrank.

In den Tabellen werden folgende Abkürzungen verwendet:

| | |
|---|---|
| RF | = Reißfestigkeit |
| RD | = Reißdehnung |
| Sp.100 | = Spannungswert bei 100 % Dehnung |
| Sp.300 | = Spannungswert bei 300 % Dehnung |
| WRW | = Weiterreißwiderstand |

RPE = Rückprallelastizität
d = Tag

Tab.1: Mechanische Elastomereigenschaften vor und nach thermischer Beanspruchung

| Beispiel | Verfahren Grundmasse | Verfahren Vernetzung | Porphyringehalt Gew.-ppm | Hitzelagerung d/250°C | Shore A | RF N/mm² | RD % | Sp.100 N/mm² | Sp.300 N/mm² | WRW N/mm | RPE % |
|---|---|---|---|---|---|---|---|---|---|---|---|
| 7 | A | S | 0 | 0 | 41 | 10.5 | 600 | 0.6 | 2.8 | 20.4 | 47 |
| 7 | A | S | 0 | 1 | 55 | 3.8 | 90 | - | - | 3.6 | 44 |
| 1 | A | S | 500 | 4 | 56 | 5.7 | 190 | 2.6 | - | 8.1 | 59 |
| 1 | A | S | 500 | 6 | 62 | 2.7 | 80 | - | - | 6.6 | 61 |
| 1 | A | S | 1000 | 6 | 58 | 5.5 | 170 | 2.9 | - | 8.0 | 61 |
| 2 | A | S | 500 | 4 | 57 | 4.9 | 190 | 2.2 | - | 11.3 | 60 |
| 2 | A | S | 500 | 6 | 60 | 4.7 | 160 | 2.5 | - | 11.2 | 60 |
| 2 | A | S | 1000 | 6 | 61 | 4.5 | 150 | 2.7 | - | 10.9 | 62 |
| 3 | A | S | 500 | 4 | 42 | 2.8 | 210 | 1.5 | - | 10.9 | 41 |
| 3 | A | S | 500 | 6 | 45 | 4.3 | 230 | 1.7 | - | 12.1 | 44 |
| 3 | A | S | 1000 | 6 | 41 | 2.8 | 220 | 1.4 | - | 10.1 | 38 |
| 4 | A | S | 500 | 4 | 50 | 5.8 | 250 | 1.9 | - | 12.4 | 52 |
| 4 | A | S | 500 | 6 | 53 | 6.1 | 220 | 2.3 | - | 9.9 | 55 |
| 4 | A | S | 1000 | 6 | 52 | 7.1 | 280 | 2.0 | - | 13.0 | 54 |
| 5 | A | S | 500 | 4 | 47 | 5.7 | 310 | 1.5 | 5.4 | 15.5 | 47 |
| 5 | A | S | 500 | 6 | 49 | 5.1 | 270 | 1.6 | - | 15.5 | 49 |
| 5 | A | S | 1000 | 6 | 48 | 4.2 | 220 | 1.7 | - | 16.5 | 47 |
| 6 | A | S | 500 | 4 | 47 | 5.4 | 280 | 1.5 | - | 16.8 | 49 |
| 6 | A | S | 500 | 6 | 49 | 5.2 | 250 | 1.7 | - | 16.5 | 52 |
| 6 | A | S | 1000 | 6 | 48 | 5.8 | 280 | 1.7 | - | 15.7 | 51 |

Tab.2: Mechanische Elastomereigenschaften vor und nach thermischer Beanspruchung

| Beispiel | Verfahren Grundmasse | Verfahren Vernetzung | Porphyringehalt Gew.-ppm | Hitzelagerung d/250°C | Shore A | RF $N/mm^2$ | RD % | Sp.100 $N/mm^2$ | Sp.300 $N/mm^2$ | WRW N/mm | RPE % |
|---|---|---|---|---|---|---|---|---|---|---|---|
| 7 | A | R | 0 | 0 | 48 | 8.4 | 490 | 1.2 | 4.4 | 32.6 | 57 |
| 7 | A | R | 0 | 1 | 58 | 2.8 | 80 | - | - | 2.7 | 59 |
| 1 | A | R | 500 | 2 | 50 | 3.6 | 160 | 2.1 | - | 10.9 | 59 |
| 2 | A | R | 500 | 2 | 47 | 6.0 | 260 | 1.8 | - | 20.2 | 51 |
| 3 | A | R | 500 | 2 | 45 | 6.5 | 330 | 1.4 | 5.8 | 24.7 | 54 |
| 4 | A | R | 500 | 2 | 48 | 8.0 | 360 | 1.5 | 6.2 | 21.4 | 54 |
| 5 | A | R | 500 | 2 | 44 | 6.7 | 340 | 1.4 | 5.7 | 22.9 | 51 |
| 6 | A | R | 500 | 2 | 46 | 8.5 | 410 | 1.3 | 5.5 | 26.9 | 57 |

Tab.3: Mechanische Elastomereigenschaften vor und nach thermischer Beanspruchung

| Beispiel | TPP-Gehalt Gew.-ppm | Hitzelagerung d/250°C | Shore A | RF N/mm² | RD % | Sp.100 N/mm² | Sp.300 N/mm² | WRW N/mm | RPE % |
|---|---|---|---|---|---|---|---|---|---|
| 8 | 0 | 0 | 42 | 9.6 | 670 | 0.9 | 3.1 | 32.6 | 49 |
| 8 | 0 | 1 | 46 | 6.2 | 260 | 1.7 | - | 19.0 | 44 |
| 8 | 0 | 2 | 62 | 3.3 | 80 | - | - | 5.6 | 61 |
| 9 | 500 | 0 | 44 | 7.6 | 620 | 0.8 | 2.5 | 29.3 | 53 |
| 9 | 500 | 2 | 44 | 5.9 | 420 | 1.0 | 3.9 | 31.2 | 47 |
| 9 | 500 | 5 | 41 | 5.6 | 380 | 1.2 | 4.4 | 26.6 | 41 |
| 9 | 500 | 7 | 43 | 5.3 | 320 | 1.4 | 4.9 | 24.0 | 41 |
| 9 | 500 | 10 | 44 | 5.8 | 320 | 1.5 | 5.4 | 22.1 | 41 |
| 10 | 0 | 0 | 52 | 8.5 | 400 | 1.9 | 6.7 | 30.2 | 64 |
| 10 | 0 | 1 | 56 | 4.8 | 160 | 2.8 | - | 8.8 | 55 |
| 10 | 0 | 2 | 77 | - | - | - | - | - | |
| 11 | 250 | 0 | 52 | 8.9 | 510 | 1.4 | 4.8 | 30.0 | 65 |
| 11 | 250 | 2 | 44 | 7.9 | 510 | 1.1 | 4.5 | 30.5 | 48 |
| 11 | 250 | 5 | 46 | 5.9 | 340 | 1.3 | 5.2 | 28.5 | 51 |
| 11 | 250 | 8 | 55 | 5.1 | 300 | 1.6 | 5.0 | 18.6 | 46 |
| 11 | 250 | 10 | 67 | 3.1 | 30 | - | - | 2.9 | 62 |
| 11 | 750 | 0 | 52 | 8.7 | 510 | 1.4 | 4.7 | 32.7 | 65 |
| 11 | 750 | 2 | 44 | 8.3 | 440 | 1.2 | 4.8 | 33.1 | 49 |
| 11 | 750 | 5 | 45 | 5.9 | 380 | 1.2 | 4.7 | 25.1 | 49 |
| 11 | 750 | 8 | 45 | 6.1 | 350 | 1.4 | 5.3 | 21.6 | 48 |
| 11 | 750 | 10 | 44 | 6.6 | 340 | 1.6 | 6.0 | 17.9 | 44 |
| 11 | 1500 | 0 | 52 | 8.1 | 480 | 1.4 | 4.7 | 31.4 | 66 |
| 11 | 1500 | 2 | 45 | 8.4 | 490 | 1.2 | 4.7 | 30.9 | 46 |
| 11 | 1500 | 5 | 44 | 5.4 | 350 | 1.2 | 4.6 | 23.7 | 46 |
| 11 | 1500 | 8 | 45 | 5.9 | 330 | 1.5 | 5.3 | 21.9 | 46 |
| 11 | 1500 | 10 | 46 | 6.2 | 320 | 1.6 | 5.7 | 17.5 | 44 |

Tab.4: Mechanische Elastomereigenschaften vor und nach thermischer Beanspruchung

| Beispiel | TPP-Gehalt Gew.-ppm | Hitzelagerung d/250°C | Shore A | RF $N/mm^2$ | RD % | Sp.100 $N/mm^2$ | Sp.300 $N/mm^2$ | WRW N/mm | RPE % |
|---|---|---|---|---|---|---|---|---|---|
| 12 | 0 | 0 | 31 | 8.8 | 670 | 0.5 | 2.0 | 26.1 | 49 |
| 12 | 0 | 1 | 42 | 4.5 | 230 | 1.2 | - | 18.1 | 44 |
| 12 | 0 | 2 | 59 | 2.8 | 90 | - | - | 8.3 | 52 |
| 13 | 500 | 0 | 30 | 8.9 | 690 | 0.4 | 1.9 | 25.3 | 50 |
| 13 | 500 | 1 | 30 | 9.1 | 630 | 0.6 | 2.9 | 25.4 | 48 |
| 13 | 500 | 2 | 31 | 7.4 | 530 | 0.6 | 3.2 | 27.6 | 48 |
| 13 | 500 | 4 | 30 | 6.0 | 430 | 0.7 | 3.6 | 23.6 | 48 |
| 13 | 500 | 5 | 31 | 5.5 | 390 | 0.7 | 3.8 | 23.3 | 47 |

## Patentansprüche

1. Siliconmassen, die Porphyrine als Hitzestabilisator enthalten.

2. Siliconmassen nach Anspruch 1, bei denen die Porphyrine den allgemeinen Formeln (1) und (2) entsprechen,

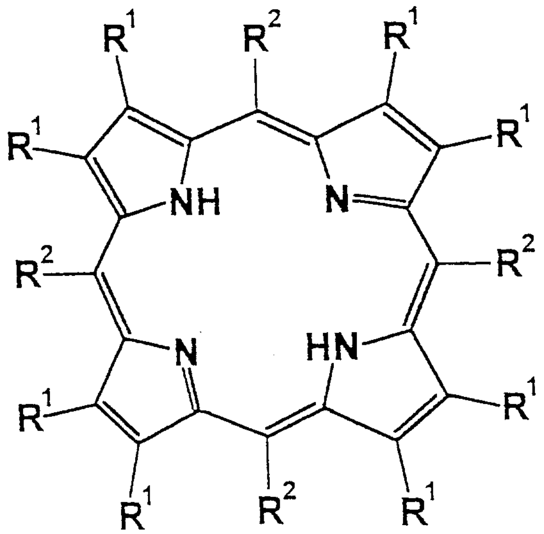

(1)

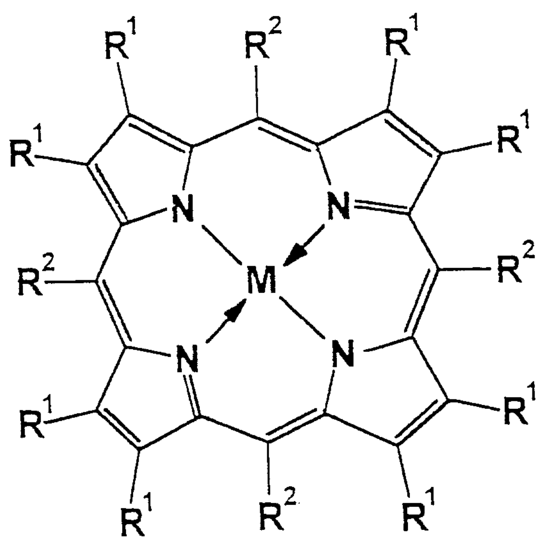

(2)

in denen

**$R^2$** gleiche oder verschiedene Reste, die ausgewählt werden aus der Gruppe -H, -OH, $-OR^3$, $-COR^3$, $-OCOR^3$, $-NO_2$, -CN, -F, -Cl, -Br, -J, -SCN, -OCN, -N=N-OH, $-NR^3_2$ und $-SO_3A$, nichtsubstituierten und mit -H, -OH, $-OR^3$, $-COR^3$, $-COOR^3$, $-OCOR^3$, $-NO_2$, -CN,-F, -Cl, -Br, -J, -SCN, -OCN, -N=N-OH, $-NR^3_2$, $-NR^3_3B$ und $-SO_3A$ substituierten monovalenten Kohlenwasserstoffresten mit 1 bis 20 Kohlenstoffatomen, wobei in den nichtsubstituierten und substituierten monovalenten Kohlenwasserstoffresten nicht benachbarte Einheiten -CH= durch Einheiten -N= und Einheiten -CH2- durch Einheiten -O-, -S- oder -NH- ersetzt sein können,

**$R^3$** ausgewählt wird aus der Gruppe -H oder monovalenten Kohlenwasserstoffresten mit 1 bis 20 Kohlenstoffatomen,

**A** ausgewählt wird aus der Gruppe -H, Na, K,

**B** ausgewählt wird aus der Gruppe Cl, F, Br, J,

**$R^1$** gleiche oder verschiedene Reste **$R^2$** oder zwei vicinale Reste **$R^1$** zusammen mit den Kohlenstoffatomen des Porphyrinrings, an die sie gebunden sind einen 5 bis 10 Kohlenstoffatome aufweisenden cyclischen Kohlenwasserstoffrest, in dem nicht benachbarte Einheiten -CH= durch Einheiten -N= und Einheiten -CH2- durch Einheiten -O-, -S- oder -NH- ersetzt sein können, wobei in dem cyclischen Kohlenwasserstoffrest, Einheiten -CH= und $-CH_2-$ mit -H, -OH, $-OR^3$, $-COR^3$, $-COOR^3$, $-OCOR^3$, $-NO_2$, - CN,-F, -Cl, - Br, -J, -SCN, -OCN, -N=N-OH, $-NR^3{}_2$, $-NR^3{}_3B$ und $-SO_3A$ substituiert sein können und

**M** ein Metall, das ausgewählt wird aus der Gruppe Li, Na, K, Rb und Cs, Be, Mg, Sr, Ba, V, Cr, Mn, Fe, Co, Ni, Cu, Zn, Zr, Ru, Hf, Os, Cd, Hg, Ag, Au, Pd, Pt, Si, Ge, Sn, In und Ce wobei, falls die Oxidationsstufe von **M** größer als 2 ist, die freien Valenzen durch Reste $\mathbf{R^2}$ oder Reste siliziumorganischer Verbindungen abgesättigt sein können, bedeuten.

**3.** Siliconmassen nach Anspruch 1 oder 2, bei denen Siliconöle stabilisiert werden.

**4.** Siliconmassen nach Anspruch 1 oder 2, nämlich vernetzungsfähige Siliconkautschukmassen.

**5.** Verwendung von Porphyrinen als Hitzestabilisator in Siliconmassen.

Europäisches Patentamt

# EUROPÄISCHER RECHERCHENBERICHT

Nummer der Anmeldung
EP 96 10 9471

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 552 818 (C.-P. WONG)<br>* Ansprüche 4-6 *<br>--- | 1-4 | C08K5/3467<br>C08L83/04<br>//(C08K5/3467,<br>C08L83:04) |
| X | INTERNATIONAL JOURNAL OF POLYMERIC MATERIALS,<br>Bd. 25, 1994, GORDON AND BREACH, NEW YORK, NY.; US,<br>Seiten 13-28, XP000196292<br>R. M. ASEEVA ET AL.: "Metal Macrocyclic Complexes as Novel High Temperature Stabilizing Agents and Flame Retardants for Polymers"<br>* Seiten 14, 16, Formeln; Seite 25, Tabelle III; Seite 27, Absatz "conclusion";<br>--- | 1-5 | |
| D,X | US-A-2 723 964 (E. L. WARRICK)<br>* Spalte 1, Zeilen 39-49; Beispiel 1 *<br>----- | 1-5 | |
| | | | RECHERCHIERTE SACHGEBIETE (Int.Cl.6) |
| | | | C08K |

Der vorliegende Recherchenbericht wurde für alle Patentansprüche erstellt

| Recherchenort | Abschlußdatum der Recherche | Prüfer |
|---|---|---|
| BERLIN | 29.August 1996 | Hoepfner, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)